# EUROPEAN PATENT SPECIFICATION

(11) **EP 4 277 165 B1**
(45) Date of publication and mention of the grant of the patent: **21.10.2026**
(21) Application number: 22172485.9
(22) Date of filing: 10.05.2022
(51) Int. Cl.: H04B 10/70, H04L 7/00, H04L 9/08

(54) **QUANTUM TIME REFERENCE SYNCHRONIZATION**
QUANTENZEITREFERENZ-SYNCHRONISIERUNG
SYNCHRONISATION DE RÉFÉRENCE TEMPORELLE QUANTIQUE

(43) Date of publication of application: 15.11.2023
(73) Proprietor: Fraunhofer-Gesellschaft zur Förderung der angewandten Forschung e.V., 80686 München (DE)
(72) Inventor: Steinlechner, Fabian, 07745 Jena (DE); Spiess, Christopher, 07743 Jena (DE); Marques Muniz, André Luiz, 07743 Jena (DE); Tangarife Villamizar, Nicolas Eduardo, 07747 Jena (DE); González Martín del Campo, Luis Javier, 07747 Jena (DE)
(74) Representative: Louis Pöhlau Lohrentz

(56) References cited:
- WO-A1-2020/140850
- WILLIAMS JAMES ET AL: "Implementation of quantum key distribution and quantum clock synchronization via time bin encoding", SPIE SMART STRUCTURES AND MATERIALS + NONDESTRUCTIVE EVALUATION AND HEALTH MONITORING, 2005, SAN DIEGO, CALIFORNIA, UNITED STATES, SPIE, US, vol. 11699, 5 March 2021 (2021-03-05), pages 1169908 - 1169908, XP060140602, ISSN: 0277-786X, ISBN: 978-1-5106-4548-6, DOI: 10.1117/12.2581862
- TIAN ZHONG ET AL: "Photon-efficient quantum key distribution using time-energy entanglement with high-dimensional enco", NEW JOURNAL OF PHYSICS, INSTITUTE OF PHYSICS PUBLISHING, BRISTOL, GB, vol. 17, no. 2, 4 February 2015 (2015-02-04), pages 22002, XP020278240, ISSN: 1367-2630, [retrieved on 20150204], DOI: 10.1088/1367-2630/17/2/022002
- THOMAS BROUGHAM ET AL: "Paper;Security of high-dimensional quantum key distribution protocols using Franson interferometers;Security of high-dimensional quantum key distribution protocols using Franson interferometers", JOURNAL OF PHYSICS B, ATOMIC MOLECULAR AND OPTICAL PHYSICS, INSTITUTE OF PHYSICS PUBLISHING, BRISTOL, GB, vol. 46, no. 10, 9 May 2013 (2013-05-09), pages 104010, XP020244794, ISSN: 0953-4075, DOI: 10.1088/0953-4075/46/10/104010
- KIM JIN-HUN ET AL: "Long-range distribution of high-quality time-bin entangled photons for quantum communication", JOURNAL OF THE KOREAN PHYSICAL SOCIETY, THE KOREAN PHYSICAL SOCIETY, SEOUL, vol. 80, no. 3, 15 December 2021 (2021-12-15), pages 203 - 213, XP037690383, ISSN: 0374-4884, [retrieved on 20211215], DOI: 10.1007/S40042-021-00342-5

## Description

The present invention provides a method for quantum time reference synchronization according to the preamble of claim 1 with entangled photon pairs and according to the preamble of claim 2 with single photons and a system for quantum time reference synchronization according to the preamble of claim 13 with entangled photon pairs and a system for quantum time reference synchronization according to the preamble of claim 14 with single photons.

Quantum technology promises metrological approaches for more precise time transfer, such as quantum clock synchronization and quantum enhanced positioning. Known quantum clock synchronization methods using entanglement distillation in order to overcome the degenerative influence of noise by transforming previously shared less entangled pairs into a smaller number of maximally entangled pairs. Other known clock synchronization methods provide a clock signal for all receivers via a physical connection.

Next to time dissemination with improved precision and accuracy, another critical aspect is the security of time transfer, i.e. ensuring authenticity and correctness of time transfer and time synchronization in a large network setting with potential malicious agents. The most quantum communication systems, for example quantum key distribution QKD, are vulnerable to man-in-the-middle attacks, i.e. a time-delay attack by an one-way time transfer communication.

To provide a secure communication, in known systems a two-way time transfer is considered, as a time-delay attack and the man-in-the middle attack can be countered by verifying the roundtrip time. For those, known systems have to ensure three necessary conditions: (1) the two receivers must transmit authenticated time signals and time data; (2) the propagation time must be irreducible to within a security alert limit; (3) the roundtrip time must be measurable to one of the two stations to within the alert limit. These complex conditions are obsolete when a secure time reference synchronization can be ensured.

It is an object of the present invention to provide an improved, more flexible and stable, easier to implement and cost-efficient time reference synchronization method and setup.

According to the present invention, a method for quantum time reference synchronization with entangled photon pairs is provided according to claim 1.

This object is achieved by a method for quantum time reference synchronization, with entangled photon pairs preferably for quantum communication, quantum information, and/or quantum key distribution, comprising the steps
i) generation of a quantum signal in an entangled photon source and transmission to a first receiver and a second receiver, whereby the quantum signal are time-energy entangled photon pairs, and whereby each time-energy entangled photon pair comprises a signal photon transmitted to the first receiver, and an idler photon transmitted to the second receiver,
ii) measurement of the time-energy entangled photon pairs at the two receivers and determination of the correlations of the quantum signal, preferably in a measurement means at the first receiver and the second receiver each;
iii) establishment of a common timing reference synchronization between the two receivers and/or detection of a time tampering in the transmission.

According to the invention, the first receiver sets a synchronization value as a master clock signal by setting the phase, the time, and/or the frequency of the time-energy entangled photon pairs at the measurement in step ii) and the second receiver is changing the phase, the time, and/or the frequency of the measurement in step ii) in order to determine the synchronization value of the first receiver, or
the source sets a synchronization value as a master clock signal by setting the phase, the time, and/or the frequency of the time-energy entangled photon pairs at the generation in step i) and the first receiver and the second receiver are changing the phase, the time, and/or the frequency of the measurement in step ii) in order to determine the synchronization value of the source, and the establishment of a common timing reference synchronization between the two receivers in step iii) is realized by tracking the correlations and setting the determined synchronization value as a clock signal, and/or
the time tampering in the transmission is realized by tracking of the correlations and detecting a change of the determined synchronization value.

According to the present invention, a method for quantum time reference synchronization with single photons is provided according to claim 2.

This object is further achieved by a method for quantum time reference synchronization with single photons, preferably for quantum communication, quantum information, and/or quantum key distribution, comprising the steps:
i) generation of a quantum signal in a single photon source and transmission to a second receiver, whereby the quantum signal are time-bin encoded single photons, and whereby each time-bin encoded single photon is transmitted to the second receiver,
ii) measurement of the time-bin encoded single photons at the second receiver and determination of the correlations of the quantum signal, preferably in a measurement means at the second receiver;
iii) establishment of a common timing reference synchronization between the second receiver and the source and/or detection of a time tampering in the transmission.

According to the invention, the source sets a synchronization value as a master clock signal by setting the phase, the time, and/or the frequency of the time-bin encoded single photon at the generation in step i) and the second receiver is changing the phase, the time, and/or the frequency of the measurement in step ii) in order to determine the synchronization value of the source, and the establishment of a common timing reference synchronization between the source and the second receiver in step iii) is realized by tracking the correlations and setting the determined synchronization value as a clock signal, and/or the time tampering in the transmission is realized by tracking of the correlations and detecting a change of the determined synchronization value.

According to the present invention, a system for quantum time reference synchronization with entangled photon pairs is provided according to claim 13.

The object is further achieved by a system for quantum time reference synchronization with entangled photon pairs, preferably, and for quantum communication, quantum information, and/or quantum key distribution, comprising a source and a first and a second receiver, whereby the common timing reference synchronization is set between the two receivers or a time tampering in the transmission is detected,
whereby the source is a time-energy entangled photon source generating time-energy entangled photon pairs as a quantum signal, and
whereby the two receivers are connected with the source via a quantum channel each, and
whereby each receiver comprises a measurement means, in order to measure the quantum signal and in order to determine the correlations of the measured time-energy entangled photon pairs between the two receivers.

According to the invention, the measurement means of the first receiver and the second receiver comprise one or more receiver modulation means, and/or the source comprises one or more source modulation means.

According to the present invention, a system for quantum time reference synchronization with single photons is provided according to claim 14.

The object is further achieved by a system for quantum time reference synchronization with single photons, preferably, and for quantum communication, quantum information, and/or quantum key distribution, comprising a source and a second receiver, whereby the common timing reference synchronization is set between the source and the second receiver or a time tampering in the transmission is detected,
whereby the source is a single photon source generating time-bin encoded single photons as a quantum signal, and
whereby the second receiver is connected with the source via a quantum channel, and
whereby the second receiver comprises a measurement means, in order to measure the quantum signal and in order to determine the correlations of the time-bin encoded single photons between the source and the second receiver. According to the invention, the measurement means of the second receiver comprise one or more receiver modulation means, and
the source comprises one or more source modulation means.

In the following, the preferred embodiments apply for the inventive method and system with entangled photon pairs as well as for the inventive method and system with single photons, if not otherwise described.

The advantage of the inventive method and the inventive system is the use of time-energy entangled photon pairs in order to agree on the synchronization value at the two receivers. The synchronization value is used to synchronize their clocks. That means no entanglement distillation is needed. The advantage of the inventive method and the inventive system using single photons is the use of time-bin encoded single photons in order to agree on a synchronization value at the second receiver and the source in order to synchronize the clock of the second receiver with the source master clock.

Another advantage of the inventive method and the inventive system is that not a master clock signal is exchanged between the receivers and/or the source but only information to determine correlations. Due to the determination of the correlations the master clock signal, the synchronization value, can be determined at one or both receivers. This means, the master clock signal does not become inaccurate due to noise at long distance transmissions and also cannot be tempered at the transmission by a third party.

Another advantage of the inventive method and the inventive system is the unknown emission time of the time-energy entangled photons, there is no possibility for an interceptor to generate a false clock signal or to establish the synchronization value on which the two receivers agreed without the knowledge of the two receivers. This applies for the time-energy entangled photon pairs as well as for the time-bin encoded single photons. Thus, a tampering is detected by the receivers by a change in the correlations.

Tracking means here the maximization of the correlations or minimization of the correlations or keeping the correlations at a fixed value by changing the phase, the time, and/or the frequency of the measurement at the first and/or the second receiver. In a preferred embodiment, the synchronization value is obtained by maximization of the correlations or minimization of the correlations or by keeping the correlations at a fixed value.

**In** a preferred embodiment, the correlations of the measured quantum signal are the coincidences of the time-energy entangled photon pairs. **In** a preferred embodiment, the correlations of the measured quantum signal are coincidences in time-bins of the time-bin encoded single photons between the source and the second receiver, preferably encoded in early or late time-bins.

**In** a preferred embodiment, the correlations are determined by a communication of the detection of the entangled photon pairs and the timing of the detection at the first and second receiver. **In** a preferred embodiment, the communication takes place between the first receiver and the second receiver.

**In** a preferred embodiment, the correlations are determined by a communication of the detection of the single photons and the timing of the detection at the second receiver and the generation of the single photons at the source. **In** a preferred embodiment, the communication takes place between the source and the second receiver.

**In** a preferred embodiment, the single photons are described by a single photon state or by a decoy state.

**In** a preferred embodiment, in order to establish the common timing reference synchronization, the correlations of the measured quantum signal are kept constant, or nearly constant. Nearly constant means here, that a security limit allows deviations in the correlations. By the aim to keep the correlations of the measured quantum signal constant, the second receiver or both receivers have to change their measurement in order to maximize the correlations or minimize the correlations or by keeping the correlations at a fixed value. **In** a preferred embodiment, the maximization and or the minimization and or the fixed value of the correlations are in the range of a security limit.

**In** a preferred embodiment, the synchronization value is a modulation signal and/or a fixed synchronization value.

**In** a preferred embodiment, the modulation signal determined by tracking the correlations is the clock signal set at the second receiver or at both receivers. **In a** preferred embodiment, the fixed synchronization value determined by tracking the correlations is the frequency of the clock signal set at the second receiver or at both receivers.

**In** a preferred embodiment, the modulation signal is obtained by changing the measurement in step ii) in the phase, the time, and/or the frequency domain in a periodical manner. **In** a preferred embodiment, the modulation signal is obtained by maximization of the correlations or minimization of the correlations or by keeping the correlations at a fixed value.

**In** a preferred embodiment, the first receiver sets the modulation signal as a master clock signal by changing the phase, the time, and/or the frequency of the measurement in step ii) and the second receiver is changing the phase, the time, and/or the frequency of the measurement in step ii) in order to maximize the correlations or minimize the correlations or by keeping the correlations at a fixed value in order to determine the modulation signal of the first receiver. Due to that, the second receiver obtains the modulation signal and can use that modulation signal as its clock signal, which is synchronized with the master clock signal of the first receiver.

In a preferred embodiment, the source sets the modulation signal as a master clock signal by changing the phase, the time, and/or the frequency at the generation in step i) and the first and/or the second receiver is changing the phase, the time, and/or the frequency of the measurement in step ii) in order to maximize the correlations or minimize the correlations or by keeping the correlations at a fixed value in order to determine the modulation signal of the source, the first receiver and/or the second receiver. This is realized by maximization, minimization or keeping the correlations at a fixed value. The second receiver or both receivers obtain the modulation signal by maximization, minimization or keeping the correlations at a fixed value and can use that modulation signal as its clock signal, which is synchronized with the master clock signal of the source.

In a preferred embodiment, the modulation signal is a periodic signal, preferably the periodic signal is dependent on the time, the phase, and/or the frequency. In a preferred embodiment, the modulation signal, preferably the periodic signal is or acts like a periodic function, preferably a sinusoidal function, more preferably is the function *A* sin(*f*₁*t* + *φ*₁) with A as the Amplitude, *f_{A}* as the frequency of the first receiver, and *φ*₁ as the phase of the first receiver.

In a preferred embodiment, the synchronization value as fixed synchronization value is obtained by changing the measurement in step ii) in the time and/or phase domain by a sweep. In a preferred embodiment, the synchronization value as fixed value is obtained by maximization of the correlations or minimization of the correlations or by setting the correlations at a fixed value.

In a preferred embodiment, the synchronization value as fixed synchronization value it the free spectral range (FSR) of the measurement means of the first receiver or the free spectral range (FSR) of the source. This frequency can be set as clock at the second receiver or both receivers without communication of the clock frequency between the source or both receivers. In a preferred embodiment for the synchronization value as fixed value, the correlations are maximized in order to synchronize the measurement means of the first receiver and the second receiver, preferably by adjustment of the unbalanced interferometers at the first receiver and/or the second receiver to the same free spectral range (FSR) value.

In a preferred embodiment, the entangled photon source generates time-energy entangled photon pairs by a laser pumping a non-linear medium. In a preferred embodiment, the source comprises a laser and a non-linear medium.

In a preferred embodiment, the non-linear medium of the entangled photon source is a non-linear waveguide or a non-linear crystal, preferably in order to generate photon pairs by a non-linear effect, more preferably by spontaneous parametric down conversion or spontaneous four wave mixing.

In a preferred embodiment, the laser of the entangled photon source is a pulsed laser and the source comprises in addition an unbalanced Mach-Zehnder interferometer or an unbalanced Michelson interferometer in order to generate time-energy entangled photon pairs. In a preferred embodiment the unbalanced Mach-Zehnder interferometer is a Franson interferometer. In a preferred embodiment, the unbalanced Mach-Zehnder interferometer or the unbalanced Michelson interferometer cause a so-called passive mode of the time-energy entangled photon pairs.

In a preferred embodiment with the source with the unbalanced Mach-Zehnder interferometer, the common timing reference synchronization is realized by adjusting the measurement in step ii) in order to establish the free spectral range (FSR) of the source in both unbalanced interferometers at the two receivers. The free spectral range (FSR) is the inverse of the time delay difference between the short and long paths of the unbalanced interferometer in the source.

In a preferred embodiment, the laser of the entangled photon source is a continues wave laser pumping the non-linear medium in order to generate time-energy entangled photon pairs.

In a preferred embodiment, the entangled photon source with a pulsed laser or the entangled photon source with the continues wave laser comprises one or more source modulation means.

In a preferred embodiment, the change of the phase, the time, and/or the frequency in step i) is realized by one or more source modulation means, and/or the change of the phase, the time, and/or the frequency in step ii) is realized by one or more receiver modulation means.

In a preferred embodiment, the source modulation means changes the time, the phase, and/or the frequency of the generated entangled photon pairs, preferably in accordance to the synchronization value, more preferably in a modulated manner. The advantage of that embodiment is that the source sets a master clock signal for both receivers by the modulation at the source and the first and the second receiver have to match their modulate in step ii) in order to maximize the correlations or minimize the correlations or to keep the correlations at a fixed value in order to determine the master clock signal, that means the synchronization value of the source. In this embodiment, the clock signal of the source is replicated at the first receiver and the second receiver in order to enable the common timing by setting the matched modulation as a clock signal.

In a preferred embodiment, the source modulation means changes the time, the phase, and/or the frequency of the generated single photons, preferably in accordance with the synchronization value, more preferably in a modulated manner. The advantage of that embodiment is that the source sets a master clock signal for the second receiver by the modulation at the source and the second receiver has to match the modulate in step ii) in order to maximize the correlations or minimize the correlations or to keep the correlations at a fixed value in order to determine the master clock signal of the source. In this embodiment, the clock signal of the source is replicated at the second receiver in order to enable the common timing by setting the matched modulation as a clock signal.

In a preferred embodiment, the single photon source generates single photons encoded in time-bins by a triggered single photon source or by a on demand single photon source, preferably by a quantum dot or by a triggered attenuated laser. In a preferred embodiment, the single photon source is a quantum dot or a triggered attenuated laser. By the triggering of the attenuated laser or by the single photon generation in the quantum dot on demand the time-bin encoding in the source is realized.

In a preferred embodiment, the single photon source generates single photons encoded in time-bins by a single photon source with an unbalanced Mach-Zehnder interferometer or an unbalanced Michelson interferometer. In a preferred embodiment, the single photon source is a single photon source with an unbalanced Mach-Zehnder interferometer or an unbalanced Michelson interferometer. By the difference between the short and long paths of the unbalanced Mach-Zehnder interferometer or an unbalanced Michelson interferometer the time-bin encoding is realized.

In a preferred embodiment, the measurement means at the first receiver and/or the second receiver comprises one or more unbalanced interferometers, preferably one or more unbalanced Mach-Zehnder interferometers or one or more unbalanced Michelson interferometers. In a preferred embodiment, the measurement in step ii) is realized by the unbalanced Mach-Zehnder interferometer or the unbalanced Michelson interferometer.

In a preferred embodiment, the measurement means at the first receiver and/or the second receiver comprises a detector behind one or more outputs of the unbalanced Mach-Zehnder interferometer or one or more unbalanced Michelson interferometer. In a preferred embodiment, the detectors are single photon detectors.

In a preferred embodiment, the unbalanced Mach-Zehnder interferometer of the measurement means at the first and the second receiver are Franson interferometers. The Franson setup with a Franson interferometer at each receiver is based on a source sending out time-correlated photons at unknown moments in time. These travel through analysis stations consisting of unbalanced (but identical) Mach-Zehnder interferometers with variable phases *φ_{A}* and *φ_{B}* in the long interferometer arm by two phase modulators. Each Franson interferometer has a path difference that is large enough to prohibit first-order interference. Identical means here, that the two Mach-Zehnder interferometers at the first and second receivers are identical, or at least as identical as possible, that means the path-difference difference (repetition intended) should be smaller than the coherence time of the individual photons so that the events of both photons taking the long path and both photons taking the short path are indistinguishable. For *φ_{A} = φ_{B}* coincidences are detected between the two receivers. There will be no interference if one photon takes the long path and the other takes the short path because then the emission time can be calculated as the early detection time minus the short path length divided by c. When this happens the relative emission time (i.e. relative time and phase (*φ*)) will become known. When both photons take the same path in the Franson interferometer, the relative emission time remains unknown, and interference is enabled.

In a preferred embodiment, the correlations, preferably the coincidences of the quantum signal, are determined by interference measurements, preferably in the Franson interferometers.

In a preferred embodiment, the measurement means at the first receiver and/or the second receiver comprises one or more single photon detectors, preferably arranged behind one or more output ports of the unbalanced interferometers. In a preferred embodiment, the measurement means at the first receiver and/or the second receiver comprises in addition an electronic means in order to determine the detection and the time of the detection and in order to determine the correlations between the measurements of the first receiver and the second receiver or between the source and the second receiver.

In a preferred embodiment, the change of the measurement of the time-energy entangled photon pairs in step ii) is realized by one or more receiver modulation means in the measurement means of the first receiver and/or the second receiver.

**In** a preferred embodiment, the change of the measurement of the time-bin encoded single photons in step ii) is realized by one or more receiver modulation means in the measurement means of the second receiver.

In a preferred embodiment, the source modulation means and/or the receiver modulation means is a phase modulator, frequency modulator, and/or a time modulator.

In a preferred embodiment, the phase modulator is an electro optical modulator, and/or Piezo stage. By the phase modulator, the phase of the quantum signal is changed, preferably at the source and/or the receivers. By changing the phase, the correlations are influenced.

In a preferred embodiment, the phase modulator is arranged in the unbalanced Mach-Zehnder interferometer or an unbalanced Michelson interferometer or in front or behind of the unbalanced Mach-Zehnder interferometer or unbalanced Michelson interferometer.

In a preferred embodiment, the frequency modulator is an electro optical modulator and/or Piezo stage in an unbalanced Mach-Zehnder interferometer or an unbalanced Michelson interferometer. By the frequency modulator, the frequency of the quantum signal is changed, preferably at the source and/or the receivers. By changing the frequency, the correlations are influenced.

In a preferred embodiment, the time modulator is a Piezo stage in an unbalanced Mach-Zehnder interferometer or an unbalanced Michelson interferometer and/or a unbalanced Mach-Zehnder interferometer or an unbalanced Michelson interferometer, and/or intensity modulator of the single photon generation. By the time modulator, the time, preferably time-bin, of the quantum signal is changed, preferably at the source and/or the receivers. By changing the time, the correlations are influenced.

In a preferred embodiment of the single photon source, the time modulator is the single photon laser generating single photons on demand, preferably by a trigger signal, whereby the time-bin of the quantum signal is changed by the trigger of the single photon source. In a preferred embodiment of the single photon source, the trigger signal of the single photon laser is the synchronization value.

In a preferred embodiment, the first receiver comprises a first clock and/or the second receiver comprises a second clock. In a preferred embodiment, the source comprises a source clock. In a preferred embodiment, the source clock is a master clock, or the first clock is a master clock. Master clock means here, that by the master clock a timing signal (the master clock signal) is provided to synchronize the clocks at the second receiver or at the first and the second receiver. In a preferred embodiment, the master clock signal is the synchronization value.

In a preferred embodiment, the clock is a frequency generator.

In a preferred embodiment, the common timing reference is a periodical signal, preferably the modulation signal. In a preferred embodiment, the common timing reference is a fixed signal, preferably the fixed synchronization value, set by the modulation signal or by a frequency corresponding to the free spectral range (FSR) or the source and/or the receivers.

In a preferred embodiment, the frequencies of the free spectral range (FSR) or of the modulation signal is used to set a common timing of the master clock and the first clock and/or the second clock, preferably to establish a common timing reference synchronization.

In a preferred embodiment, the source is connected via a quantum channel to the first receiver and the second receiver each.

In a preferred embodiment, the quantum channel is a guided quantum channel or a non-guided quantum channel. A guided quantum channel is for example a fiber. A non-guided quantum channel is for example a free-space channel.

In a preferred embodiment, the source is located locally separated of the first and second receiver.

In a preferred embodiment, the first receiver is located at the source, preferably the source controls the first receiver. In this embodiment the source can generate entangled photon pairs and can sets the synchronization value as a master clock signal via the first receiver by controlling the first receiver. In this embodiment the first receiver, controlled by the source, sets a synchronization value as a master clock signal by setting the phase, the time, and/or the frequency of the time-energy entangled photon pairs at the measurement in step ii) and the second receiver is changing the phase, the time, and/or the frequency of the measurement in step ii) in order to determine the synchronization value of the first receiver.

In a preferred embodiment, the quantum signal is used for time reference synchronization and for quantum key distribution (QKD). In that embodiment, a part of the photons of the quantum signal are used for the time reference synchronization and the remaining photons of the quantum signal are used for quantum key distribution QKD with time-energy entangled photon pairs. The selection of the photons can be active or passive, for example active by a movable optical element or a switch in the path, or for example passive by a beam splitter.

In a preferred embodiment, more than two receivers are synchronized by the generation of a multitude of time-energy entangled photon pairs with different wavelength in the source and the separation by a wavelength division multiplexer in the source.

The above and other aspects, features and advantages of the present invention will become more apparent from the following detailed description when taken in conjunction with the accompanying drawings.

### Brief Description of the Drawings:

- Fig. 1:: schematic diagram of a first embodiment of the inventive system for quantum time reference synchronization with entangled photon pairs and modulation means at the receivers;
- Fig. 2:: schematic diagram of a second embodiment of the inventive system for quantum time reference synchronization with entangled photon pairs and modulation means at the source and the receivers;
- Fig. 3:: schematic diagram of a third embodiment of the inventive system for quantum time reference synchronization with single photons;
- Fig. 4:: schematic diagram of a fourth embodiment of the inventive system for quantum time reference synchronization with entangled photons and the first receiver controlled by the source.

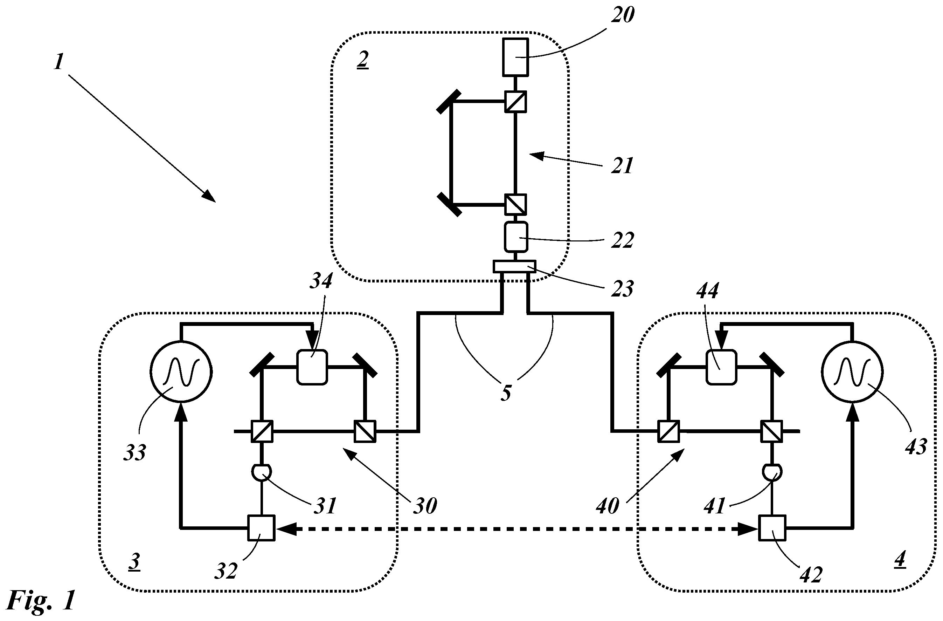

Fig. 1 shows a first embodiment of the system 1 for quantum time reference synchronization with entangled photon pairs comprising a source 2, a first receiver 3, a second receiver 4, and two quantum channels 5 connecting the source 2 with the first receiver 3 and the second receiver 4.

The source 2 in the embodiment of Fig. 1 comprises a laser 2 generating a pulsed laser beam. The pulsed laser beam is guided via an unbalanced Mach-Zehnder interferometer 21 of the source 2 to a non-linear element 22.

The unbalanced Mach-Zehnder interferometer 21 of the source 2 comprise two beam splitters and two mirrors in order to form a short arm and a long arm as depicted in Fig. 1. By the unbalanced Mach-Zehnder interferometer 21 of the source 2 two time-shifted pulses out of one laser pulse of the laser 20 are generated pumping the non-linear element 22 in order to generate photon pairs. By the unknown generation time of the photon pairs due to the first pump pulse or the second pump pulse in the non-linear element 22 time-energy entangled photon pairs are generated.

The entangled photon pairs in this embodiment are frequency degenerated, that means the signal photon of each entangled photon pair and the idler photon of each entangled photon pair have different wavelength. The signal photons and the idler photons are guided via a wavelength sensitive means 23 to the first receiver 3 and the second receiver 4, respectively.

The first receiver 3 comprises an unbalanced Mach-Zehnder interferometer 30 and a detector 31 arranged at one output port of the unbalanced Mach-Zehnder interferometer 30 in order to detect the signal photon of an entangled photon pair. The detection and the timing of the detection is registered in an electronic 32 of the first receiver 3.

The unbalanced Mach-Zehnder interferometer 30 of the first receiver 3 comprises two beam splitters and two mirrors in order to form a short arm and a long arm as depicted in Fig. 1. In the embodiment of Fig. 1 in the long arm of the unbalanced Mach-Zehnder interferometer 30 of the first receiver 3 a modulation means 34 of the first receiver 3 is arranged. The modulation means 34 of the first receiver 3 is controlled by a frequency generator 33 of the first receiver 3, whereby the frequency generator 33 is controlled by the electronic 32 of the first receiver 3.

The second receiver 4 is built identically and operates in the same way as the first receiver 3, comprising an unbalanced Mach-Zehnder interferometer 40, a detector 41, an electronic 42, a frequency generator 43, and a modulation means 44 of the second receiver 4.

In the setup 1 of Fig. 1 the source 2 generates time-energy entangled photon pairs and sends the signal photon of each pair to the first receiver 3 and the idler photon of each pair to the second receiver 4. The first receiver 3 sets a synchronization value by its frequency generator 33 influencing the measurement by the modulation means 34. In this embodiment, the frequency generator 33 of the first receiver 3 acts as a master clock.

In order to synchronize the frequency generator 33 of the first receiver 3 and the frequency generator 43 of the second receiver 4, the second receiver 4 has to change the signal of the frequency generator 43 of the second receiver 4 by the electronic 42 of the second receiver 4 in order to maximize the correlations of the measurements of the time-energy entangled photon pairs. By finding the same synchronization value at the second receiver 4 by maximization of the correlation the two frequency generators 33 and 43 run synchronous.

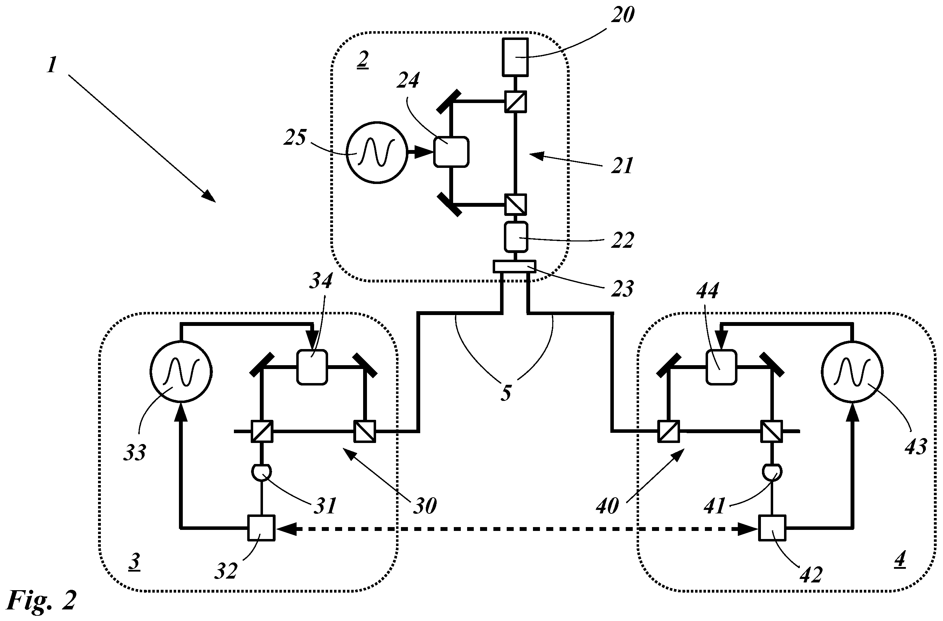

Fig. 2 shows a second embodiment of the system 1 for quantum time reference synchronization with entangled photon pairs. The embodiment of Fig. 2 differs from the embodiment of Fig. 1 only by a modulation means 24 in the source 2 and a frequency generator 25 in the source 2.

In the embodiment of Fig. 2 the frequency generator 25 in the source 2 acts as a master clock by setting the synchronization value by the frequency generator 25 of the source 2, influencing the generation of the time-energy entangled photon pairs via the modulation means 24 of the source 2. In this embodiment the first receiver 3 and the second receiver 4 have to synchronize the output of the frequency generator 33 of the first receiver 3 and the frequency generator 43 of the second receiver 4 in order to enable a timing reference synchronization between the two receivers. This is realized by maximization of the correlations of the time-energy entangled photon pairs at the two receivers.

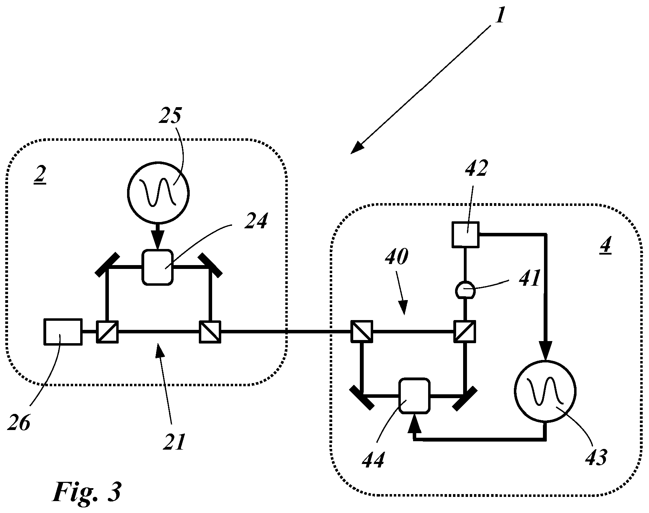

Fig. 3 shows an embodiment of the system 1 for quantum time reference synchronization with single photons with a source 2 and the second receiver 4.

The source 2 of Fig. 3 comprises an attenuated laser 26 or a on demand single photon source, the unbalanced Mach-Zehnder interferometer 21, the modulation means 24, and the frequency generator 25 of the source 2. By the unbalanced Mach-Zehnder interferometer 21 and the modulation means 24 time-bin encoded single photons are generated. The modulation means 24 can be in this embodiment for example a piezo stage, changing the time-bin length. In order to synchronize the frequency generator 43 of the second receiver 4 with the frequency generator 25 of the source 2 in this example the change of the time-bin length has to be found by the second receiver 4 by maximization of the time-bin correlations.

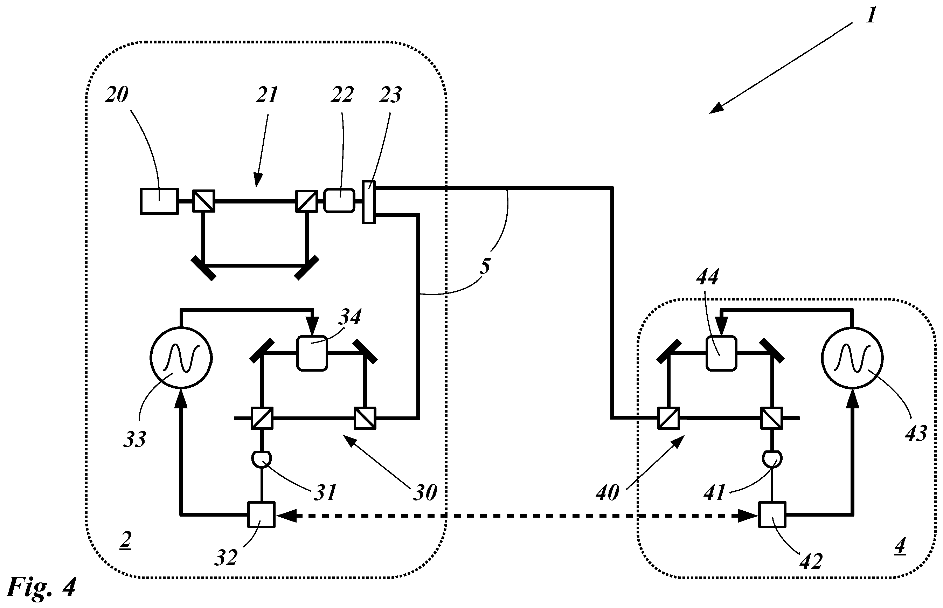

Fig. 4 shows an embodiment of the system 1 for quantum time reference synchronization with entangled photon pairs with a source 2 and the second receiver 4. This embodiment differs from the embodiment of fig. 1 only in that the components of the first receiver 3 in fig. 1 are in control of the source 2 in fig. 4. That means, that the source 2 in fig. 4 also comprises the components of the first receiver 3 of fig. 1. The source 2 comprises in fig. 4 in addition the unbalanced Mach-Zehnder interferometer 30 and the detector 31 arranged at one output port of the unbalanced Mach-Zehnder interferometer 30 in order to detect the signal photon of an entangled photon pair. The detection and the timing of the detection is registered in the electronic 32. The unbalanced Mach-Zehnder interferometer 30 comprises two beam splitters and two mirrors in order to form a short arm and a long arm as depicted in Fig. 4. In the embodiment of Fig. 4 in the long arm of the unbalanced Mach-Zehnder interferometer 30 the modulation means 34 is arranged. The modulation means 34 is controlled by the frequency generator 33, whereby the frequency generator 33 is controlled by the electronic 32. All these components are in control of the source 2 in fig. 4.

In this embodiment the source 2 generates entangled photon pairs and sets the synchronization value as a master clock signal via the components of the first receiver 3 of fig. 1.

The second receiver 4 in fig. 4 is identically to the second receiver 4 in fig. 1, comprising the unbalanced Mach-Zehnder interferometer 40, the detector 41, the electronic 42, the frequency generator 43, and the modulation means 44 of the second receiver 4.

In the setup 1 of Fig. 4 the source 2 generates time-energy entangled photon pairs, keeps the signal photon of each pair and sends the idler photon of each pair to the second receiver 4. The source 2 sets a synchronization value via the components of the first receiver 3 of fig. 1 by its frequency generator 33 influencing the measurement by the modulation means 34. In this embodiment, the frequency generator 33 acts as a master clock.

In order to synchronize the frequency generator 33 and the frequency generator 43 of the second receiver 4, the second receiver 4 has to change the signal of the frequency generator 43 of the second receiver 4 by the electronic 42 of the second receiver 4 in order to maximize the correlations of the measurements of the time-energy entangled photon pairs. By finding the same synchronization value at the second receiver 4 by maximization of the correlation the two frequency generators 33 and 43 run synchronous.

### Reference signs:

- 1: system for quantum time reference synchronization
- 2: source
- 3: first receiver
- 4: second receiver
- 5: quantum channel

- 20: laser
- 21: unbalanced Mach-Zehnder interferometer of the source
- 22: non-linear element
- 23: wavelength sensitive means
- 24: modulation means of the source
- 25: frequency generator of the source
- 26: attenuated laser

- 30: unbalanced Mach-Zehnder interferometer of the first receiver
- 31: detector of the first receiver
- 32: electronic of the first receiver
- 33: frequency generator of the first receiver
- 34: modulation means of the first receiver

- 40: unbalanced Mach-Zehnder interferometer of the second receiver
- 41: detector of the second receiver
- 42: electronic of the second receiver
- 43: frequency generator of the second receiver
- 44: modulation means of the second receiver

## Claims

1. Method for quantum time reference synchronization, with entangled photon pairs preferably for quantum communication, quantum information, and/or quantum key distribution, comprising the steps
i) generation of a quantum signal in an entangled photon source (2) and transmission to a first receiver (3) and a second receiver (4), whereby the quantum signal are time-energy entangled photon pairs, and whereby each time-energy entangled photon pair comprises a signal photon transmitted to the first receiver (3), and an idler photon transmitted to the second receiver (4),
ii) measurement of the time-energy entangled photon pairs at the two receivers (3, 4) and determination of the correlations of the quantum signal, preferably in a measurement means at the first receiver (3) and the second receiver (4) each;
iii) establishment of a common timing reference synchronization between the two receivers (3, 4) and/or detection of a time tampering in the transmission;
**characterized in that**
the first receiver (3) sets a synchronization value as a master clock signal by setting the phase, the time, and/or the frequency of the time-energy entangled photon pairs at the measurement in step ii) and the second receiver (4) is changing the phase, the time, and/or the frequency of the measurement in step ii) in order to determine the synchronization value of the first receiver (3), or
the source (2) sets a synchronization value as a master clock signal by setting the phase, the time, and/or the frequency of the time-energy entangled photon pairs at the generation in step i) and the first receiver (3) and the second receiver (4) are changing the phase, the time, and/or the frequency of the measurement in step ii) in order to determine the synchronization value of the source (2), and
the establishment of a common timing reference synchronization between the two receivers (3, 4) in step iii) is realized by tracking the correlations and setting the determined synchronization value as a clock signal, and/or the time tampering in the transmission is detected by tracking of the correlations and detecting a change of the determined synchronization value.

2. Method for quantum time reference synchronization with single photons, preferably for quantum communication, quantum information, and/or quantum key distribution, comprising the steps
i) generation of a quantum signal in a single photon source (2) and transmission to a second receiver (4), whereby the quantum signal are time-bin encoded single photons, and whereby each time-bin encoded single photon is transmitted to the second receiver (4),
ii) measurement of the time-bin encoded single photons at the second receiver (4) and determination of the correlations of the quantum signal, preferably in a measurement means at the second receiver (4);
iii) establishment of a common timing reference synchronization between the second receiver (4) and the source (2) and/or detection of a time tampering in the transmission;
**characterized in that**
the source (2) sets a synchronization value as a master clock signal by setting the phase, the time, and/or the frequency of the time-bin encoded single photon at the generation in step i) and the second receiver (4) is changing the phase, the time, and/or the frequency of the measurement in step ii) in order to determine the synchronization value of the source (2), and
the establishment of a common timing reference synchronization between the source (3) and the second receiver (4) in step iii) is realized by tracking the correlations and setting the determined synchronization value as a clock signal, and/or
the time tampering in the transmission is detected by tracking of the correlations and detecting a change of the determined synchronization value.

3. Method according to one of the claims 1 or 2,
**characterized in that**
the synchronization value is obtained by maximization of the correlations or minimization of the correlations or by keeping the correlations at a fixed value.

4. Method according to one of the claims 1 or 3,
**characterized in that**
the correlations of the measured quantum signal are the coincidences of the time-energy entangled photon pairs.

5. Method according to one of the claims 2 or 3,
**characterized in that**
the correlations of the measured quantum signal are coincidences in time-bins of the time-bin encoded single photons between the source and the second receiver, preferably encoded in early or late time-bins.

6. Method according to one of the claims 1 to 5,
**characterized in that**
in order to establish the common timing reference synchronization, the correlations of the measured quantum signal are kept constant, or nearly constant.

7. Method according to one of the claims 1 to 6,
**characterized in that**
the synchronization value is a modulation signal or a fixed synchronization value.

8. Method according to claim 7,
**characterized in that**
the first receiver (3) sets the modulation signal as a master clock signal by changing the phase, the time, and/or the frequency of the measurement in step ii) and the second receiver (4) is changing the phase, the time, and/or the frequency of the measurement in step ii) in order to maximize the correlations or minimize the correlations or by keeping the correlations at a fixed value in order to determine the modulation signal of the first receiver (3).

9. Method according to claim 7,
**characterized in that**
the source (2) sets the modulation signal as a master clock signal by changing the phase, the time, and/or the frequency at the generation in step i) and the first and/or the second receiver (3, 4) is changing the phase, the time, and/or the frequency of the measurement in step ii) in order to maximize the correlations or minimize the correlations or by keeping the correlations at a fixed value in order to determine the modulation signal of the source (2).

10. Method according to claim one of the claims 7 to 9,
**characterized in that**
the synchronization value as fixed synchronization value is obtained by changing the measurement in step ii) in the time and/or phase domain by a sweep.

11. Method according to one of the claims 1 to 10,
**characterized in that**
the change of the phase, the time, and/or the frequency in step i) is realized by one or more source modulation means (24), and/or the change of the phase, the time, and/or the frequency in step ii) is realized by one or more receiver modulation means (34, 44).

12. Method according to one of the claims 1 to 11,
**characterized in that**
the quantum signal is used for time reference synchronization and for quantum key distribution (QKD), preferably a part of the photons of the quantum signal are used for the time reference synchronization and the remaining photons of the quantum signal are used for quantum key distribution QKD with time-energy entangled photon pairs.

13. System (1) for quantum time reference synchronization with entangled photon pairs, preferably for quantum communication, quantum information, and/or quantum key distribution, comprising a source (2) and a first and a second receiver (3, 4), whereby the common timing reference synchronization is set between the two receivers (3, 4) or a time tampering in the transmission is detected,
whereby the source (2) is a time-energy entangled photon source generating time-energy entangled photon pairs as a quantum signal, and whereby the two receivers (3, 4) are connected with the source (2) via a quantum channel (5) each, and
whereby each receiver comprises a measurement means, in order to measure the quantum signal and in order to determine the correlations of the measured time-energy entangled photon pairs between the two receivers (3, 4),
**characterized in that**
the measurement means of the first receiver (3) and the second receiver (4) comprise one or more receiver modulation means (34, 44), and the source (2) comprises one or more source modulation means (24).

14. System (1) for quantum time reference synchronization with single photons, preferably for quantum communication, quantum information, and/or quantum key distribution, comprising a source (2) and a receiver (4), whereby the common timing reference synchronization is set between the source (2) and the receiver (4) or a time tampering in the transmission is detected,
whereby the source (2) is a single photon source generating time-bin encoded single photons as a quantum signal, and
whereby the receiver (4) is connected with the source via a quantum channel (5), and
whereby the receiver (4) comprises a measurement means, in order to measure the quantum signal and in order to determine the correlations of the time-bin encoded single photons between the source (2) and the receiver (4),
**characterized in that**
the measurement means of the receiver (4) comprise one or more receiver modulation means (44), and
the source (2) comprises one or more source modulation means (24).

15. System (1) according to one of the claims 13 or 14, **characterized in that**
the source modulation means (24) and/or the receiver modulation (44) means is a phase modulator, frequency modulator, and/or a time modulator.

## Patentansprüche

1. Verfahren zur Quanten-Zeitreferenzsynchronisation mit verschränkten Photonenpaaren, vorzugsweise zur Quantenkommunikation, Quanteninformation und/oder Quantenschlüsselverteilung, umfassend die Schritte
i) Erzeugung eines Quantensignals in einer Quelle für verschränkte Photonen (2) und Übertragung an einen ersten Empfänger (3) und einen zweiten Empfänger (4), wobei es sich bei dem Quantensignal um Zeit-Energie-verschränkte Photonenpaare handelt und wobei jedes Zeit-Energie-verschränkte Photonenpaar ein an den ersten Empfänger (3) übertragenes Signalphoton und ein an den zweiten Empfänger (4) übertragenes Idlerphoton umfasst,
ii) Messung der Zeit-Energie-verschränkten Photonenpaare an den zwei Empfängern (3, 4) und Ermittlung der Korrelationen des Quantensignals, vorzugsweise jeweils in einem Messmittel an dem ersten Empfänger (3) und an dem zweiten Empfänger (4);
iii) Erstellung einer gemeinsamen Zeitreferenzsynchronisation zwischen den zwei Empfängern (3, 4) und/oder Detektion einer Zeitmanipulation bei der Übertragung;
**dadurch gekennzeichnet,**
**dass** der erste Empfänger (3) einen Synchronisationswert als Master-Taktsignal festlegt, indem er die Phase, die Zeit und/oder die Frequenz der Zeit-Energie-verschränkten Photonenpaare bei der Messung in Schritt ii) festlegt, und der zweite Empfänger (4) die Phase, die Zeit und/oder die Frequenz der Messung in Schritt ii) ändert, um den Synchronisationswert des ersten Empfängers (3) zu ermitteln, oder
die Quelle (2) einen Synchronisationswert als Master-Taktsignal festlegt, indem sie die Phase, die Zeit und/oder die Frequenz der Zeit-Energie-verschränkten Photonenpaare bei der Erzeugung in Schritt i) festlegt, und der erste Empfänger (3) und der zweite Empfänger (4) die Phase, die Zeit und/oder die Frequenz der Messung in Schritt ii) ändern, um den Synchronisationswert der Quelle (2) zu ermitteln, und
die Erstellung einer gemeinsamen Zeitreferenzsynchronisation zwischen den zwei Empfängern (3, 4) in Schritt iii) durch Tracken der Korrelationen und Festlegen des ermittelten Synchronisationswerts als Taktsignal realisiert wird und/oder
die Zeitmanipulation in der Übertragung durch Tracken der Korrelationen und Detektion einer Änderung des ermittelten Synchronisationswerts detektiert wird.

2. Verfahren zur Quanten-Zeitreferenzsynchronisation mit Einzelphotonen, vorzugsweise zur Quantenkommunikation, Quanteninformation und/oder Quantenschlüsselverteilung, umfassend die Schritte
i) Erzeugung eines Quantensignals in einer Einzelphotonenquelle (2) und Übertragung an einen zweiten Empfänger (4), wobei es sich bei dem Quantensignal um time-bin codierte Einzelphotonen handelt und wobei jedes time-bin codierte Einzelphoton an den zweiten Empfänger (4) übertragen wird,
ii) Messung der time-bin codierten Einzelphotonen an dem zweiten Empfänger (4) und Ermittlung der Korrelationen des Quantensignals, vorzugsweise in einem Messmittel an dem zweiten Empfänger (4);
iii) Erstellung einer gemeinsamen Zeitreferenzsynchronisation zwischen dem zweiten Empfänger (4) und der Quelle (2) und/oder Detektion einer Zeitmanipulation bei der Übertragung;
**dadurch gekennzeichnet,**
**dass** die Quelle (2) einen Synchronisationswert als Master-Taktsignal festlegt, indem sie die Phase, die Zeit und/oder die Frequenz des time-bin codierten Einzelphotons bei der Erzeugung in Schritt i) festlegt, und der zweite Empfänger (4) die Phase, die Zeit und/oder die Frequenz der Messung in Schritt ii) ändert, um den Synchronisationswert der Quelle (2) zu ermitteln, und die Erstellung einer gemeinsamen Zeitreferenzsynchronisation zwischen der Quelle (3) und dem zweiten Empfänger (4) in Schritt iii) durch Tracken der Korrelationen und Festlegen des ermittelten Synchronisationswerts als Taktsignal realisiert wird und/oder
die Zeitmanipulation in der Übertragung durch Tracken der Korrelationen und Detektion einer Änderung des ermittelten Synchronisationswerts detektiert wird.

3. Verfahren nach einem der Ansprüche 1 oder 2,
**dadurch gekennzeichnet,**
**dass** der Synchronisationswert durch Maximierung der Korrelationen oder Minimierung der Korrelationen oder durch Halten der Korrelationen auf einem festen Wert erhalten wird.

4. Verfahren nach einem der Ansprüche 1 oder 3,
**dadurch gekennzeichnet,**
**dass** die Korrelationen des gemessenen Quantensignals die Koinzidenzen der Zeit-Energie-verschränkten Photonenpaare sind.

5. Verfahren nach einem der Ansprüche 2 oder 3,
**dadurch gekennzeichnet,**
**dass** die Korrelationen des gemessenen Quantensignals Koinzidenzen in den time-bins der time-bin codierten Einzelphotonen zwischen der Quelle und dem zweiten Empfänger sind, vorzugsweise codiert in frühen oder späten time-bins.

6. Verfahren nach einem der Ansprüche 1 bis 5,
**dadurch gekennzeichnet,**
**dass** zur Erstellung der gemeinsamen Zeitreferenzsynchronisation die Korrelationen des gemessenen Quantensignals konstant oder nahezu konstant gehalten werden.

7. Verfahren nach einem der Ansprüche 1 bis 6,
**dadurch gekennzeichnet,**
**dass** der Synchronisationswert ein Modulationssignal oder ein fester Synchronisationswert ist.

8. Verfahren nach Anspruch 7,
**dadurch gekennzeichnet,**
**dass** der erste Empfänger (3) das Modulationssignal als Master-Taktsignal festlegt, indem er die Phase, die Zeit und/oder die Frequenz der Messung in Schritt ii) ändert, und der zweite Empfänger (4) die Phase, die Zeit und/oder die Frequenz der Messung in Schritt ii) ändert, um die Korrelationen zu maximieren oder um die Korrelationen zu minimieren oder durch Halten der Korrelationen auf einem festen Wert, um das Modulationssignal des ersten Empfängers (3) zu ermitteln.

9. Verfahren nach Anspruch 7,
**dadurch gekennzeichnet,**
**dass** die Quelle (2) das Modulationssignal als Master-Taktsignal festlegt, indem sie die Phase, die Zeit und/oder die Frequenz bei der Erzeugung in Schritt i) ändert, und der erste und/oder der zweite Empfänger (3, 4) die Phase, die Zeit und/oder die Frequenz der Messung in Schritt ii) ändert, um die Korrelationen zu maximieren oder um die Korrelationen zu minimieren oder durch Halten der Korrelationen auf einem festen Wert, um das Modulationssignal der Quelle (2) zu ermitteln.

10. Verfahren nach einem der Ansprüche 7 bis 9,
**dadurch gekennzeichnet,**
**dass** der Synchronisationswert als fester Synchronisationswert erhalten wird, indem die Messung in Schritt ii) in der Zeit- und/oder Phasendomäne durch einen Sweep geändert wird.

11. Verfahren nach einem der Ansprüche 1 bis 10,
**dadurch gekennzeichnet,**
**dass** die Änderung der Phase, der Zeit und/oder der Frequenz in Schritt i) durch eine oder mehrere Quellenmodulationsmittel (24) realisiert wird, und/oder die Änderung der Phase, der Zeit und/oder der Frequenz in Schritt ii) durch ein oder mehrere Empfängermodulationsmittel (34, 44) realisiert wird.

12. Verfahren nach einem der Ansprüche 1 bis 11,
**dadurch gekennzeichnet,**
**dass** das Quantensignal zur Zeitreferenzsynchronisation und zur Quantenschlüsselverteilung (QKD) verwendet wird, vorzugsweise ein Teil der Photonen des Quantensignals zur Zeitreferenzsynchronisation verwendet wird und die übrigen Photonen des Quantensignals zur Quantenschlüsselverteilung (QKD) mit Zeit-Energie-verschränkten Photonenpaaren verwendet werden.

13. System (1) zur Quanten-Zeitreferenzsynchronisation mit verschränkten Photonenpaaren, vorzugsweise zur Quantenkommunikation, Quanteninformation und/oder Quantenschlüsselverteilung, umfassend eine Quelle (2) sowie einen ersten und einen zweiten Empfänger (3, 4), wobei zwischen den zwei Empfängern (3, 4) die gemeinsame Zeitreferenzsynchronisation festgelegt wird oder eine Zeitmanipulation bei der Übertragung detektiert wird,
wobei die Quelle (2) eine Zeit-Energie-verschränkte Photonenquelle ist, die Zeit-Energie-verschränkte Photonenpaare als Quantensignal erzeugt, und wobei die zwei Empfänger (3, 4) jeweils über einen Quantenkanal (5) mit der Quelle (2) verbunden sind, und
wobei jeder Empfänger ein Messmittel umfasst, um das Quantensignal zu messen und um die Korrelationen der gemessenen Zeit-Energie-verschränkten Photonenpaare zwischen den zwei Empfängern (3, 4) zu ermitteln,
**dadurch gekennzeichnet,**
**dass** die Messmittel des ersten Empfängers (3) und des zweiten Empfängers (4) ein oder mehrere Empfängermodulationsmittel (34, 44) umfassen, und die Quelle (2) ein oder mehrere Quellenmodulationsmittel (24) umfasst.

14. System (1) zur Quanten-Zeitreferenzsynchronisation mit Einzelphotonen, vorzugsweise zur Quantenkommunikation, Quanteninformation und/oder Quantenschlüsselverteilung, umfassend eine Quelle (2) und einen Empfänger (4), wobei die gemeinsame Zeitreferenzsynchronisation zwischen der Quelle (2) und dem Empfänger (4) festgelegt wird oder eine Zeitmanipulation bei der Übertragung detektiert wird,
wobei die Quelle (2) eine Einzelphotonenquelle ist, die time-bin codierte Einzelphotonen als Quantensignal erzeugt, und
wobei der Empfänger (4) über einen Quantenkanal (5) mit der Quelle verbunden ist, und
wobei der Empfänger (4) ein Messmittel umfasst, um das Quantensignal zu messen und um die Korrelationen der time-bin codierten Einzelphotonen zwischen der Quelle (2) und dem Empfänger (4) zu ermitteln,
**dadurch gekennzeichnet,**
**dass** das Messmittel des Empfängers (4) ein oder mehrere Empfängermodulationsmittel (34, 44) umfasst, und
die Quelle (2) ein oder mehrere Quellenmodulationsmittel (24) umfasst.

15. System (1) nach einem der Ansprüche 13 oder 14,
**dadurch gekennzeichnet,**
**dass** das Quellenmodulationsmittel (24) und/oder das Empfängermodulationsmittel (44) ein Phasenmodulator, ein Frequenzmodulator und/oder ein Zeitmodulator ist.

## Revendications

1. Procédé de synchronisation de référence temporelle quantique, utilisant des paires de photons intriqués, de préférence pour la communication quantique, l'information quantique et/ou la distribution de clés quantiques, comprenant les étapes
i) génération d'un signal quantique dans une source de photons intriqués (2) et transmission vers un premier récepteur (3) et un deuxième récepteur (4), le signal quantique étant constitué de paires de photons intriqués en temps-énergie, et chaque paire de photons intriqués en temps-énergie comprenant un photon de signal transmis au premier récepteur (3) et un photon idler transmis au deuxième récepteur (4),
ii) mesure des paires de photons intriqués en temps -énergie au niveau des deux récepteurs (3, 4) et la détermination des corrélations du signal quantique, de préférence à l'aide d'un moyen de mesure situé respectivement au niveau du premier récepteur (3) et du deuxième récepteur (4) ;
iii) établissement d'une synchronisation de référence temporelle commune entre les deux récepteurs (3, 4) et/ou la détection d'une altération temporelle dans la transmission ;
**caractérisée en ce que**
le premier récepteur (3) définit une valeur de synchronisation servant de signal d'horloge maître en réglant la phase, le temps et/ou la fréquence des paires de photons intriqués temps-énergie lors de la mesure à l'étape ii), et le deuxième récepteur (4) modifie la phase, le temps et/ou la fréquence de la mesure à l'étape ii) afin de déterminer la valeur de synchronisation du premier récepteur (3), ou
la source (2) définit une valeur de synchronisation servant de signal d'horloge maître en réglant la phase, le temps et/ou la fréquence des paires de photons intriqués en temps-énergie lors de la génération à l'étape i), et le premier récepteur (3) et le deuxième récepteur (4) modifient la phase, le temps et/ou la fréquence de la mesure à l'étape ii) afin de déterminer la valeur de synchronisation de la source (2), et
établissement d'une synchronisation de référence temporelle commune entre les deux récepteurs (3, 4) à l'étape iii) est réalisé en suivant les corrélations et en définissant la valeur de synchronisation déterminée comme signal d'horloge, et/ou
l'altération temporelle dans la transmission est détectée en suivant les corrélations et en détectant une modification de la valeur de synchronisation déterminée.

2. Procédé de synchronisation de référence temporelle quantique utilisant des photons uniques, de préférence pour la communication quantique, l'information quantique et/ou la distribution de clés quantiques, comprenant les étapes suivantes
i) génération d'un signal quantique dans une source de photons uniques (2) et sa transmission vers un deuxième récepteur (4), le signal quantique étant constitué de photons uniques codés par intervalle de temps, et chaque photon unique codé par intervalle de temps étant transmis au deuxième récepteur (4),
ii) mesure des photons uniques codés par intervalle de temps au niveau du deuxième récepteur (4) et détermination des corrélations du signal quantique, de préférence à l'aide d'un moyen de mesure situé au niveau du deuxième récepteur (4);
iii) établissement d'une synchronisation de référence temporelle commune entre le deuxième récepteur (4) et la source (2) et/ou la détection d'une altération temporelle dans la transmission;
**caractérisée en ce que**
la source (2) définit une valeur de synchronisation servant de signal d'horloge maître en réglant la phase, le temps et/ou la fréquence du photon unique codé par intervalle de temps lors de la génération à l'étape i), et le deuxième récepteur (4) modifie la phase, le temps et/ou la fréquence de la mesure à l'étape ii) afin de déterminer la valeur de synchronisation de la source (2), et l'établissement d'une synchronisation de référence temporelle commune entre la source (3) et le deuxième récepteur (4) à l'étape iii) est réalisée en suivant les corrélations et en définissant la valeur de synchronisation déterminée comme signal d'horloge, et/ou
l'altération temporelle dans la transmission est détectée en suivant les corrélations et en détectant une modification de la valeur de synchronisation déterminée.

3. Procédé selon l'une des revendications 1 ou 2,
**caractérisée en ce que**
la valeur de synchronisation est obtenue soit en maximisant les corrélations, soit en les minimisant, soit en les maintenant à une valeur fixe.

4. Procédé selon l'une des revendications 1 ou 3,
**caractérisée en ce que**
les corrélations du signal quantique mesuré sont les coïncidences entre les paires de photons intriqués en temps-énergie.

5. Procédé selon l'une des revendications 2 ou 3,
**caractérisée en ce que**
les corrélations du signal quantique mesuré correspondent à des coïncidences dans des intervalles de temps des photons uniques codés par intervalle de temps, entre la source et le deuxième récepteur, de préférence codés dans des intervalles de temps précoces ou tardifs.

6. Procédé selon l'une des revendications 1 ou 5,
**caractérisée en ce que**
afin d'établir la synchronisation de la référence temporelle commune, les corrélations du signal quantique mesuré sont maintenues constantes, ou quasi constantes.

7. Procédé selon l'une des revendications 1 ou 6,
**caractérisée en ce que**
la valeur de synchronisation est un signal de modulation ou une valeur de synchronisation fixe.

8. Procédé selon la revendication 7,
**caractérisée en ce que**
le premier récepteur (3) définit le signal de modulation comme signal d'horloge maître en modifiant la phase, le temps et/ou la fréquence de la mesure à l'étape ii), et le deuxième récepteur (4) modifie la phase, le temps et/ou la fréquence de la mesure à l'étape ii) afin de maximiser les corrélations ou de minimiser les corrélations ou de maintenir les corrélations à une valeur fixe, afin de déterminer le signal de modulation du premier récepteur (3).

9. Procédé selon la revendication 7,
**caractérisée en ce que**
la source (2) définit le signal de modulation comme signal d'horloge maître en modifiant la phase, le temps et/ou la fréquence lors de la génération à l'étape i), et le premier et/ou le deuxième récepteur (3, 4) modifie la phase, le temps et/ou la fréquence de la mesure à l'étape ii) afin de maximiser les corrélations ou de minimiser les corrélations, ou de maintenir les corrélations à une valeur fixe, afin de déterminer le signal de modulation de la source (2).

10. Procédé selon l'une des revendications 7 à 9,
**caractérisée en ce que**
la valeur de synchronisation, en tant que valeur de synchronisation fixe, est obtenue en modifiant la mesure à l'étape ii) dans le domaine temporel et/ou phase par un balayage.

11. Procédé selon l'une des revendications 1 ou 10,
**caractérisée en ce que**
la modification de la phase, du temps et/ou de la fréquence à l'étape i) est réalisée par un ou plusieurs moyens de modulation de source (24), et/ou la modification de la phase, du temps et/ou de la fréquence à l'étape ii) est réalisée par un ou plusieurs moyens de modulation de récepteur (34, 44).

12. Procédé selon l'une des revendications 1 ou 11,
**caractérisée en ce que**
le signal quantique est utilisé pour la synchronisation de la référence temporelle et pour la distribution de clés quantiques (QKD) ; de préférence, une partie des photons du signal quantique est utilisée pour la synchronisation de la référence temporelle et les photons restants du signal quantique sont utilisés pour la distribution de clés quantiques (QKD) à l'aide de paires de photons intriqués en temps-énergie.

13. Système (1) de synchronisation de référence temporelle quantique à l'aide de paires de photons intriqués, destiné de préférence à la communication quantique, à l'information quantique et/ou à la distribution de clés quantiques, comprenant une source (2) ainsi qu'un premier et un deuxième récepteur (3, 4), dans lequel la synchronisation de la référence temporelle commune est établie entre les deux récepteurs (3, 4) ou une altération temporelle dans la transmission est détectée,
dans lequel la source (2) est une source de photons intriqués en temps-énergie qui génère des paires de photons intriqués en temps-énergie sous forme de signal quantique, et
dans lequel les deux récepteurs (3, 4) sont reliés à la source (2) par l'intermédiaire d'un canal quantique (5) chacun, et
dans lequel chaque récepteur comprenant un moyen de mesure destiné à mesurer le signal quantique et à déterminer les corrélations entre les paires de photons intriqués en temps-énergie mesurées entre les deux récepteurs (3, 4), **caractérisée en ce que**
les moyens de mesure du premier récepteur (3) et du deuxième récepteur (4) comprennent un ou plusieurs moyens de modulation de récepteur (34, 44), et la source (2) comprend un ou plusieurs moyens de modulation de source (24).

14. Système (1) de synchronisation de référence temporelle quantique à l'aide de photons uniques, destiné de préférence à la communication quantique, à l'information quantique et/ou à la distribution de clés quantiques, comprenant une source (2) et un récepteur (4), dans lequel la synchronisation de la référence temporelle commune est établie entre la source (2) et le récepteur (4) ou une altération temporelle dans la transmission est détectée,
dans lequel la source (2) est une source de photons uniques générant des photons uniques codés par intervalle de temps sous forme de signal quantique, et
dans lequel le récepteur (4) est relié à la source par un canal quantique (5), et dans lequel le récepteur (4) comprend un moyen de mesure, destiné à mesurer le signal quantique et à déterminer les corrélations entre les photons uniques codés par intervalle de temps entre la source (2) et le récepteur (4), **caractérisée en ce que**
les moyens de mesure du récepteur (4) comprennent un ou plusieurs moyens de modulation du récepteur (44), et
la source (2) comprend un ou plusieurs moyens de modulation de source (24).

15. Système (1) selon l'une des revendications 13 ou 14,
**caractérisée en ce que**
le moyen de modulation de la source (24) et/ou le moyen de modulation du récepteur (44) est un modulateur de phase, un modulateur de fréquence et/ou un modulateur temporel.
